# EUROPÄISCHE PATENTSCHRIFT

(11) **EP 4 127 091 B1**
(45) Veröffentlichungstag und Bekanntmachung des Hinweises auf die Patenterteilung: **04.03.2026**
(21) Anmeldenummer: 21715578.7
(22) Anmeldetag: 26.03.2021
(51) Int. Cl.: C09J 7/38, B05B 12/24

(54) **ABDECKBAND UND EIN VERFAHREN ZU SEINER HERSTELLUNG**
COVERING TAPE AND A METHOD FOR THE PRODUCTION THEREOF
BANDE DE RECOUVREMENT ET PROCÉDÉ DE PRODUCTION CORRESPONDANT

(30) Priorität: 27.03.2020 DE 102020203982
(43) Veröffentlichungstag der Anmeldung: 08.02.2023
(73) Patentinhaber: tesa SE, 22848 Norderstedt (DE)
(72) Erfinder: FINK, Mathias, 22415 Hamburg (DE); SIMON, Tim, 22850 Norderstedt (DE); BÖHM, Jennifer, 22769 Hamburg (DE)
(74) Vertreter: tesa SE
(86) Internationale Anmeldenummer: PCT/EP2021/058032
(87) Internationale Veröffentlichungsnummer: WO 2021/191452

(56) Entgegenhaltungen:
- EP-A1- 0 548 576
- EP-A2- 0 841 384

## Beschreibung

Die Erfindung betrifft ein Abdeckband mit einem Klebeband mit wenigstens einer Klebseite zum Aufkleben auf eine Arbeitsfläche und einem Randabschnitt und einem auf dem Randabschnitt aufkaschierten Abdeckfolienrand einer Abdeckfolie, die eine dem aufkaschierten Abdeckfolienrand entlang einer Breite der Abdeckfolie gegenüberliegende freie Anfasskante aufweist, und die Abdeckfolie ist zum Randabschnitt hin gefaltet und bildet einen Folienstapel aus.

Die Erfindung betrifft auch ein Verfahren zur Herstellung eines gefalteten Abdeckbandes, indem ein Abdeckfolienrand einer Abdeckfolie auf einen Randabschnitt eines Klebebandes aufkaschiert wird, die Abdeckfolie zum Randabschnitt hin gefaltet wird und einen Folienstapel ausbildet.

Abdeckbänder sind im Stand der Technik natürlich hinlänglich bekannt.

Aus der EP 1 149 883 B1 ist ein Abdeckband mit einem Klebeband mit einem Papierträger mit einer Selbstklebemasse bekannt, wobei im Randbereich der Selbstklebemasse Abdeckmaterial mit guter Farbhaftung aufkaschiert ist und in demselben Randbereich der Selbstklebemasse eine Abdeckfolie aufkaschiert ist und die Abdeckfolie das Abdeckmaterial vollständig abdeckt und die Abdeckfolie das Abdeckmaterial hinterlegt. Das Abdeckband weist eine gute Haftung für Lack auf, der daher auch nach der Ofentrocknung nicht abfällt. Das Abdeckband eignet sich insbesondere zur Maskierung von nicht zu lackierenden Flächen bei der Autolackierung.

In der EP 1 149 634 B1 ist ein Abdeckband aus einem temperaturbeständigen Klebeband mit einem biegsamen Folienträger und einer Selbstklebemasse offenbart, wobei im Randbereich der Selbstklebemasse ein Abdeckmaterial aufkaschiert ist, das eine gute Farbhaftung und Saugfähigkeit aufweist. Eine im selben Lackrandbereich aufkaschierte Abdeckfolie hinterlegt im aufgeklebten Zustand ebenfalls das Abdeckmaterial. Im Gegensatz zur erstgenannten Druckschrift wird hier allgemein ein Abdeckmaterial mit guter Farbhaftung und Saugfähigkeit offenbart. Auch dieses Abdeckband eignet sich zur Kennzeichnung von auszusparenden Flächen bei der Lackierung von Automobilen.

Aus der EP 0 841 384 A2 ist eine Abdeckbahn für Mal- und Lackierarbeiten bekannt. Die mehrlagig gefaltete Abdeckbahn aus Kunststofffolie ist für Mal-, Verputz- und Lackierarbeiten geeignet. Ein überstehender Längsrandstreifen trägt ein Klebeband, das seitlich übersteht und mit einem Deckband abgedeckt ist. Die Kombination von Klebeband und Deckband erlaubt flexible Materialwahl für unterschiedliche Anwendungen.

Die EP 0 548 576 A1 beschreibt eine Abdeckfolie, die leporelloartig gefaltet ist und dem Schutz angrenzender Flächen bei Bearbeitungen dient. Ein einlagiger Randbereich enthält einen Verstärkungsstreifen mit Klebstoff auf der Außenseite. Die Dicke des Verstärkungsstreifens entspricht der Dicke der gefalteten Folie, um Wickelprobleme zu vermeiden.

Üblicherweise ist die Abdeckfolie sehr breit, und sie wird daher gefaltet und in einem Folienstapel neben dem Klebeband angeordnet. Das Abdeckband wird üblicherweise als Rollenware zur Verfügung gestellt. Es hat sich als nachteilig erwiesen, dass die Abdeckfolie nur mühsam zu entfalten ist, da eine Anfasskante im Folienstapel verschwindet und von dem Abdeckmaterial verdeckt ist. Außerdem können automatische Greifvorrichtungen solche Anfasskanten nicht/ sehr schwer erfassen, wodurch ein zuverlässiges automatisches Entfalten der Folie nicht möglich ist.

Es ist daher in einem ersten Aspekt Aufgabe der vorliegenden Erfindung, ein Abdeckband zur Verfügung zu stellen, das leichter zu entfalten ist.

Es ist in einem zweiten Aspekt Aufgabe der Erfindung, ein Verfahren zur Herstellung eines leichter entfaltbaren Abdeckbandes zur Verfügung zu stellen.

Die Aufgabe wird in ihrem ersten Aspekt durch ein Abdeckband mit den Merkmalen des Anspruchs 1 erfüllt.

Der im erfindungsgemäßen Abdeckband vorhandene Abdeckfolienstapel umfasst beziehungsweise insbesondere besteht er aus einer Abdeckfolie, die eine Breite und eine Länge aufweist, und die Abdeckfolie ist entlang einer entlang der Länge verlaufenden Faltungslinie zu einer Doppellage gefaltet, wobei zwei freie Längsränder der doppellagig gefalteten Abdeckfolie nebeneinanderliegend verlaufen und die doppellagige Abdeckfolie zu einem Stapel gefaltet ist. Dabei liegt einer der freien Längsränder frei zugänglich auf dem Abdeckfolienstapel auf.

Die Abdeckfolie weist üblicherweise einen rechteckigen Außenumfang auf mit der Länge, die um ein Vielfaches größer ist als die Breite, und mit der Breite, die um ein Vielfaches größer ist als eine Dicke der Abdeckfolie. Die Länge der Abdeckfolie kann im Prinzip unendlich sein, zumindest mehrere Meter; die Breite einer Abdeckfolie kann aber auch zwischen einigen Zentimetern, Dezimetern bis hin zu einigen Metern sein. Um derartige Abdeckfolien handhabbar zu machen, werden die Abdeckfolien zu einem Stapel gefaltet. Der Abdeckfolienstapel macht von der Idee Gebrauch, die Abdeckfolie zunächst doppellagig zu falten und dann so zu falten, dass die beiden Längsränder, die in Längsrichtung verlaufen, nebeneinanderliegend verlaufen. Sie können exakt übereinander verlaufen oder auch versetzt zueinander verlaufen; vorzugsweise liegen sie auf dem Abdeckfolienstapel auf. Es entstehen ein äußerer und ein innerer Längsrand. Der äußere Längsrand ist dabei frei zugänglich und mit den Fingern greifbar.

Der zwischen dem Abdeckfolienstapel und dem äußeren Längsrand liegende innere Längsrand ist entweder von dem äußeren Längsrand abgedeckt oder ragt ein Stück weit unter dem äußeren Längsrand hervor, so dass auch er frei zugänglich ist, beispielsweise mit den Fingern gegriffen werden kann oder auch mit einer Maschine greifbar ist und einer weiteren Verwendung zugeführt werden kann. Insbesondere kann der untere freie Längsrand maschinell greifbar sein und mit einem Klebeband verbunden werden, das dem Abdeckfolienstapel händisch oder auch maschinell zugeführt wird.

Vorzugsweise ist die Abdeckfolie in einer Ziehharmonikafaltung gefaltet und eine äußere Doppellage um den Ziehharmonikastapel wenigstens U-förmig herumgelegt. Durch die U-förmige Umschließung des Ziehharmonikastapels durch die äußere Doppellage bleibt der Abdeckfolienstapel geschlossen und kann leichter verbraucht werden.

In einer anderen Ausführungsform der Erfindung ist die Doppellage in einer Schneckenfaltung gefaltet. Auch hier umfasst vorzugsweise eine äußere Abdecklage den Abdeckfolienstapel vorzugsweise U-förmig. Es sind auch Mischungen der Ziehharmonikafaltung und der Schneckenfaltung denkbar.

Der äußere Längsrand liegt außen auf dem Abdeckfolienstapel auf und ist frei greifbar. Er bildet vorzugsweise eine Anfasskante aus. Der äußere Längsrand kann mit den Fingern eines Benutzers leicht gegriffen werden und die Abdeckfolie so entlang der Breite auseinandergezogen werden. Günstigerweise erstrecken sich die Anfasskante wie auch grundsätzlich die Längsränder über die gesamte Längsausdehnung der Abdeckfolien und des Abdeckfolienstapels. Der Abdeckfolienstapel weist eine Länge auf, die der Länge der Abdeckfolie entspricht, eine Breite des Abdeckfolienstapels ist um ein Vielfaches kleiner als die Breite der Abdeckfolie selbst. Günstigerweise kann der Abdeckfolienstapel so auf eine Rolle aufgerollt werden und bevorratet werden.

In einer Weiterbildung der Erfindung ist der äußere Längsrand der äußeren Abdeckfolienlage rückwärts umgeklappt. Somit ist der äußere Längsrand besonders gut zugänglich und mit den Fingern greifbar.

Die Anfasskante kann auch farblich oder haptisch markiert sein, so dass sie leicht erkennbar und auch mit den Fingern greifbar ist.

Die Abdeckfolie ist günstigerweise als PE-, PP-, PA-, PBT oder PET-Folie ausgebildet, kann aber auch Papier oder eine Metallfolie (zum Beispiel Aluminiumfolie) sein. Darüber hinaus sind insbesondere Verbundfolien aus obigen Folienmaterialien vorteilhaft. Es sind aber auch andere Materialien denkbar.

Erfindungsgemäß weist die Abdeckfolie eine Anfasskante auf, die frei auf dem Folienstapel aufliegend angeordnet ist.

Unter einem Band wird hier grundsätzlich eine Verkörperung mit einer Länge, einer Breite und einer Dicke verstanden, wobei die Länge das Vielfache der Breite und die Breite ein Vielfaches der Dicke beträgt. Das Abdeckband kann über seine gesamte Längsausdehnung eine gleichbleibende Breite aufweisen und eine entlang der Ausdehnung der Breite unterschiedliche Dicke aufweisen. Die Dicke kann aber auch entlang der Breite konstant sein.

Das erfindungsgemäße Abdeckband weist ein Klebeband und eine Abdeckfolie auf. Das Klebeband weist günstigerweise eine Trägerschicht und eine Klebmasseschicht auf. Die Trägerschicht kann aus gängigen Kunststoffen, wie Polyethylen, Polypropylen oder weiteren, unten beschriebenen Kunststoffen bestehen. Die Trägerschicht kann auch aus Papier oder Metallfolien (zum Beispiel Aluminiumfolie) bestehen. Die Klebmasseschicht kann eine Haftklebmasse sein, die aus verschiedenen Materialien, zum Beispiel unpolaren Elastomeren, besteht. Sie kann aber auch aus bspw. Acrylaten bestehen. Auch diese sind weiter unten aufgeführt.

Das Klebeband des Abdeckbandes weist vorzugsweise eine über seine gesamte Länge gleichbleibende Breite und Dicke auf. Die Abdeckfolie weist ebenfalls vorzugsweise eine über ihre Länge und Breite gleichbleibende Dicke auf.

Die Abdeckfolie umfasst einen Abdeckfolienrand, der auf einen Randabschnitt des Klebebandes aufkaschiert ist. Die Abdeckfolie kann auf der der Klebseite abgewandten Seite des Klebebandes fixiert sein, sie kann aber auch auf die Klebseite aufkaschiert sein. Unter Fixieren versteht man vorzugsweise Kaschieren, die Abdeckfolie kann aber auch angeschweißt, über eine Heißsiegelschicht fixiert, verklebt oder anderweitig fixiert sein. Das Abdeckband kann auch lokal durch Verwendung eines Tools erzeugt werden, wobei das angesprochene Tool ein separates Klebeband auf der gefalteten Abdeckfolie lokal fixiert.

Die Abdeckfolie ist vorzugsweise ebenfalls bandförmig ausgebildet. Sie weist eine dem aufkaschierten Abdeckfolienrand entlang der Länge der Abdeckfolie gegenüberliegende freie Anfasskante auf. Bei der Anfasskante handelt es sich um den dem fixierten Abdeckfolienrand gegenüberliegenden Abdeckfolienrand, dessen äußerstes Ende die Anfasskante ausbildet.

Das Abdeckband wird zum Verkauf und zur Lagerung üblicherweise mit einer zusammengefalteten Abdeckfolie zur Verfügung gestellt. Dabei ist die Abdeckfolie zum Randabschnitt hin gefaltet und bildet einen Folienstapel aus. Die zusammengefaltete Abdeckfolie ist zu einem Wickel aufgewickelt.

Im zusammengefalteten Zustand der Abdeckfolie kann das Abdeckband leicht aufgerollt werden. Der Folienstapel weist dabei eine Breite auf, die deutlich geringer ist als die Breite der Abdeckfolie. Der Folienstapel kann durch 3, 5, 7, 9, 12 oder sogar mehr Faltungen der Abdeckfolie gebildet werden.

Der Folienstapel der Abdeckfolie zeichnet sich dadurch aus, dass die Anfasskante auf einer der Klebseite des Klebebandes gegenüberliegenden Seite des Folienstapels aufliegt. Die Anfasskante kann nach dem Abwickeln des Abdeckbandes von dem Wickel einfach mit den Fingern gefasst werden, und die Abdeckfolie kann dann problemlos ausgebreitet werden. Es ist nicht mehr wie im Stand der Technik erforderlich, die Anfasskante zwischen Folienstapel und einem Abdeckmaterial "herauszufischen" oder in einem Folienstapel mühselig zu ertasten und herauszuziehen. Weiterhin ist es möglich, die Anfasskante automatisch zu erfassen und zu greifen.

Die Anfasskante liegt auf einer der Klebseite des Klebebandes gegenüberliegenden Seite des Folienstapels frei auf. So ist es möglich, dass zunächst das Abdeckband entrollt, dann das Klebeband mit seiner Klebseite auf die Arbeitsfläche aufgeklebt werden kann und danach die Abdeckfolie einfach an der oben auf dem Folienstapel des aufgeklebten Abdeckbandes aufliegenden Anfasskante gegriffen und auseinandergezogen werden kann.

In einer bevorzugten Ausführungsform weist die Anfasskante, wobei unter Anfasskante nicht eine logische Linie, sondern vielmehr ein sehr schmaler Streifen entlang der äußeren freien Kante der Abdeckfolie zu verstehen ist, eine innere Seite auf, die unter Kontakt auf dem Folienstapel angeordnet ist, und eine äußere Seite auf, die keinen Kontakt hat, das heißt die äußere Seite hat weder Kontakt mit dem Folienstapel noch mit dem Klebeband noch irgendeinen Kontakt. Es ist allerdings auch möglich, dass die Anfasskante gekräuselt oder gefaltet ist. Weiterhin kann die Anfasskante durch farbliche Markierung oder Fixierung von kontrasterzeugenden Streifen gesondert optisch und/oder haptisch hervorgehoben werden.

Die so angeordnete Anfasskante liegt frei zugänglich für den Benutzer oben auf dem Folienstapel auf, der Arbeitsfläche des aufgeklebten Abdeckbandes am Folienstapel gegenüberliegend, so dass die Anfasskante vom Benutzer mit den Fingen gegriffen werden kann und vom Folienstapel abgezogen werden kann und die Abdeckfolie so zur vollständigen Entfaltung kommt. In der vollständigen Entfaltung ist die Abdeckfolie einlagig und plan ausgebildet.

Besonders bevorzugt weist der Folienstapel eine doppellagige Ziehharmonikafaltung auf, das heißt zunächst wird die Abdeckfolie einmal entlang der Breite vollständig oder mit leichtem Versatz übereinandergefaltet, so dass die Abdeckfolie doppellagig ausgebildet ist (bei Versatz mit einem kurzen und längeren Schenkel der Folie), und die entstehende Doppellage wird dann ziehharmonikaförmig gefaltet. Dabei wird die Ziehharmonikafaltung vorzugsweise unterhalb, das heißt der Anfasskante gegenüberliegend, auf der Klebseite des Abdeckbandes gefaltet, so dass die Anfasskante weiterhin frei zugänglich oben, der Klebseite des Abdeckbandes abgewandt, auf dem Folienstapel aufliegt. Die Doppellage kann aber auch lediglich einmal gefaltet vorliegen.

Günstigerweise weist der Folienstapel dabei eine äußere gefaltete Lage der Abdeckfolie auf, die alle anderen gefalteten Lagen des Folienstapels an einer der Klebseite des Klebebandes abgewandten Seite des Folienstapels U-förmig umfasst. Die äußerste gefaltete Lage umfasst den gesamten Folienstapel U-förmig und hält so den Folienstapel zusammen, nachdem das Abdeckband abgerollt ist und die Klebseite des Klebebandes bereits auf die Arbeitsfläche aufgeklebt ist. Es kommt also nicht zu einer selbsttätigen Entfaltung des Folienstapels.

Die Abdeckfolie ist günstigerweise als PE-, PP-, PA-, PBT oder PET-Folie ausgebildet, kann aber auch Papier oder eine Metallfolie (zum Beispiel Aluminumfolie) sein. Darüber hinaus sind insbesondere Verbundfolien aus obigen Folien beziehungsweise Folienmaterialien vorteilhaft. Weitere Kunststoffe sind in der speziellen Ausführungsform der Erfindung dargestellt, sie lassen sich jedoch für alle Ausführungsformen des Abdeckbandes verwenden.

Günstigerweise kann das Klebeband als Maskierklebeband ausgebildet sein. Dabei sind PVC-basierte Klebebänder vorteilhaft. Weiterhin kann das Klebeband als Kreppband ausgebildet sein. Dabei handelt es sich um eine besonders kostengünstige Form des Klebebandes. Prinzipiell sind aber alle Klebebänder denkbar, auch jene ohne Trägermaterial.

Die Aufgabe wird hinsichtlich des Verfahrens durch ein eingangs genanntes Verfahren mit den Merkmalen des Anspruchs 10 gelöst.

Das Herstellungsverfahren eignet sich insbesondere zur Herstellung eines der oben genannten Abdeckbänder. Umgekehrt lassen sich die oben genannten Abdeckbänder günstigerweise durch eines der nachfolgend genannten Verfahren herstellen.

Das Verfahren betrifft die Herstellung eines gefalteten Abdeckbandes, indem ein Randabschnitt einer Abdeckfolie auf einem Randabschnitt eines Klebebandes fixiert wird, die Abdeckfolie zum Randabschnitt hin gefaltet wird und einen Folienstapel ausbildet. Hinsichtlich der Auslegung der Begriffe des Randes und der Anordnung wird auf die obigen Ausführungen verwiesen.

Im Verfahren wird erfindungsgemäß eine dem aufkaschierten Abdeckfolienrand entlang einer Länge der Abdeckfolie gegenüberliegende freie Anfasskante auf dem Folienstapel frei aufliegend angeordnet. Das Abdeckband kann durch Falten der Abdeckfolie, die durchaus eine Breite von 50 cm, 1 m, 1,5 m, 2 m, 2,5 m oder mehr betragen kann und dadurch wenig handhabbar ist, auf eine deutlich geringere Breite gefaltet werden. Die Breite des gefalteten Abdeckbandes beträgt lediglich 20 cm, 40 cm, 60 cm wobei auch alle Zwischenmaße mitoffenbart sind. Es sind auch andere Breiten des zusammengefalteten Abdeckbandes denkbar.

Die erfindungsgemäße Faltung ist so ausgelegt, dass die dem Klebeband gegenüberliegende Kante der Abdeckfolie, die frei ist, auch nach der Faltung leicht zugänglich für den Benutzer oben auf dem Folienstapel aufliegt. Dabei liegt die Anfasskante vorzugsweise entlang der gesamten Längsausdehnung vorzugsweise auf der Seite des Folienstapels auf, die einer Klebseite des Klebebandes gegenüberliegend am Abdeckband angeordnet ist. Dadurch ist es möglich, die Anfasskante leicht entlang der ganzen Längsausdehnung durch den Benutzer zu greifen, auch nachdem das Abdeckband bereits mit dem Klebeband auf eine Arbeitsfläche aufgeklebt wurde.

Günstigerweise wird die Abdeckfolie doppellagig gelegt und ziehharmonikaförmig gefaltet. Durch die ziehharmonikaförmige Faltung bildet sich der Folienstapel aus. Dieser ist günstigerweise auf der Klebseite des Klebebandes angeordnet, so dass die Anfasskante weiterhin frei zugänglich oben auf dem Folienstapel der Klebseite gegenüberliegend angeordnet bleibt.

Günstigerweise ist die Anfasskante entlang vorzugsweise der gesamten Längsausdehnung des Klebebandes ca. 0 cm - 10 cm neben dem Klebebandrand angeordnet, sie kann aber auch weiter von dem Klebeband entfernt liegend angeordnet sein. Besonders bevorzugt liegt die Anfasskante direkt am Klebeband an.

Die Erfindung wird anhand eines Ausführungsbeispiels in drei Figuren beschrieben. Dabei zeigen:
- Fig. 1: perspektivische Ansicht eines erfindungsgemäßen Abdeckbandes im gefalteten und abgewickelten Zustand,
- Fig. 2: Schnittansicht entlang der Linie II. in Fig. 1,
- Fig.3: Schnittansicht einer weiteren Ausführungsform des erfindungsgemäßen Abdeckbandes.

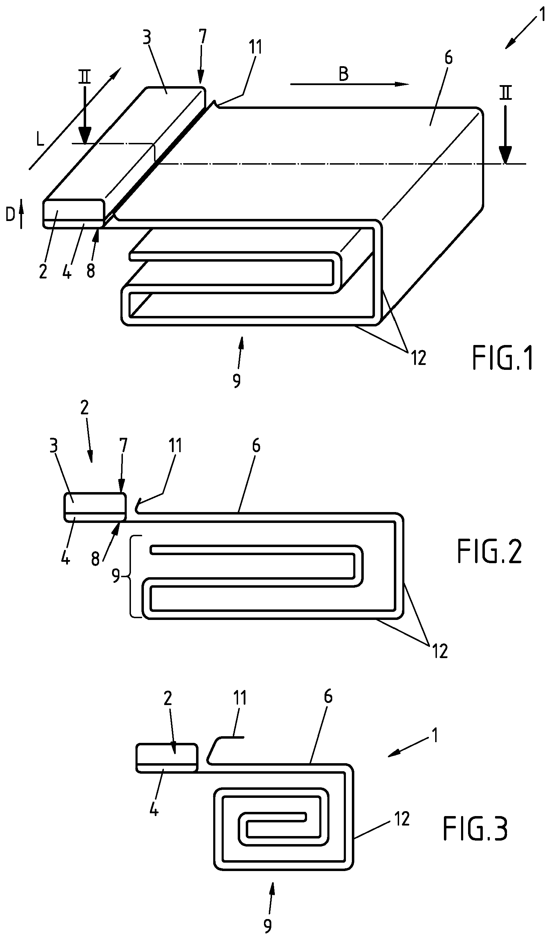

Fig. 1 zeigt ein Abdeckband 1 mit einem Klebeband 2, das sich in einer Längsrichtung L erstreckt. Unter einem Band, d. h. Abdeckband 1 oder Klebeband 2, wird ein sich in der Längsrichtung L im Wesentlichen sehr lang, grundsätzlich endlos erstreckendes Band verstanden, dessen Länge L um ein Vielfaches größer als eine Ausdehnung entlang einer Breite B ist. Das Band 1, 2 weist auch eine Ausdehnung entlang einer Dicke D auf. Die Dicke des Abdeckbands 1 ist entlang der Breite B unterschiedlich. Typische Maße sind im Folgenden angegeben. Das Klebeband 2 weist in diesem Beispiel typischerweise eine Breite B von 15 mm bis 30 mm auf, und das Abdeckband weist im Abschnitt des Klebebandes 2 eine Dicke von 100 µm bis 250 µm auf. Von der Längsseite des Klebebandes 2 geht die Abdeckfolie 6 ab. Die Breite B des Abdeckbandes 1 im Abschnitt der Abdeckfolie 6 beträgt hier typischerweise 500 mm bis 2.500 mm, im Abschnitt der Abdeckfolie 6 weist das Abdeckband 1 typischerweise eine Dicke von 10 µm bis 50 µm auf, wobei sich die Dicke auf eine einzelne Lage der Abdeckfolie bezieht und nicht auf den gesamten Abdeckstapel.

Die Ausdehnung entlang der Breite B ist um ein Vielfaches größer als die Ausdehnung entlang der Dicke D. Unter "Vielfaches" wird hier das 100fache bis über 10.000fache verstanden.

Das Klebeband 2 umfasst meist eine Trägerschicht 3 und eine Klebmasseschicht 4. Die Trägerschicht 3 besteht aus einem gängigen Kunststoff, Papier und/oder Metall (zum Beispiel Aluminium). Beispielsweise für Kunststoffe, aber nicht einschränkend, erwähnt seien:
Polyethylen (PE), Polypropylen (PP) - insbesondere das durch mono- oder biaxiale Streckung erzeugte orientierte Polypropylen (OPP), cyclische Olefin Copolymere (COC), Polyvinylchlorid (PVC), Polyester - insbesondere Polyethylenterephthalat (PET), Poylethylennaphthalat (PEN) und Polybutylenterephthalat (PBT), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Ethylen-Vinylacetat (EVA) sowie Copolymere, Blends, mehrlagige Folien beziehungsweise Verbundfolien aus oben genannten Polymeren, die zum Beispiel geklebt, geschweißt oder coextrudiert sind. Weiterhin können die Träger behandelt vorliegen, bspw. durch Beschichtung mit einem Primer oder Lack, vorbehandelt durch Corona und/oder Ätzung, bedruckt oder anderweitig modifiziert. Papier kann ebenfalls beschichtet, gekreppt, bedruckt oder anderweitig vorbehandelt und/oder modifiziert vorliegen. Selbiges gilt für Träger auf Metallbasis.

Die Klebmasseschicht 4 besteht aus einer üblichen Haftklebmasse, beispielsweise Acrylate, Natur- und Synthesekautschukmassen, Silikone usw.

Die Klebmasseschicht 4 ist vorzugsweise vollflächig auf eine Seite der Trägerschicht 3 aufgebracht. Sie kann aber auch entlang eines Streifens auf der Trägerschicht neben der Abdeckfolie angeordnet sein.

Das Klebeband 2 weist einen abdeckfolienseitigen Randabschnitt 7 auf, der auch Teil der Klebmasseschicht 4 sein kann. Auf dem Randabschnitt 7 ist ein Abdeckfolienrand 8 der Abdeckfolie 6 fixiert.

Bei der Abdeckfolie 6 handelt es sich vorzugsweise ebenfalls beispielhaft, aber nicht einschränkend, um folgendes Material:
Papier, Metall (zum Beispiel Aluminium), Polyethylen (PE), Polypropylen (PP) - insbesondere das durch mono- oder biaxiale Streckung erzeugte orientierte Polypropylen (OPP), cyclische Olefin Copolymere (COC), Polyvinylchlorid (PVC), Polyester - insbesondere Polyethylenterephthalat (PET), Poylethylennaphthalat (PEN) und Polybutylenterephthalat (PBT), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Ethylen-Vinylacetat (EVA) sowie Copolymere, Blends, mehrlagige Folien beziehungsweise Verbundfolien aus oben genannten Polymeren, die zum Beispiel geklebt, geschweißt oder coextrudiert sind. Weiterhin können die Träger behandelt vorliegen, bspw. durch Beschichtung mit einem Primer oder Lack, vorbehandelt durch Corona und/oder Ätzung, bedruckt oder anderweitig modifiziert. Papier kann ebenfalls beschichtet, gekreppt, bedruckt oder anderweitig vorbehandelt und/oder modifiziert vorliegen. Selbiges gilt für Träger auf Metallbasis.

Das Abdeckband 1 in Fig. 1 ist sehr lang, wobei hier nur ein in Längsrichtung L kurzer Abschnitt des Abdeckbandes 1 dargestellt ist. Günstigerweise kann das Abdeckband 1 zu einem Wickel aufgewickelt sein. Im aufgewickelten Zustand wird das Abdeckband vorzugsweise transportiert und vor dem Gebrauch gelagert. Dabei ist die Klebeschicht 4 des Klebebandes 2 wickelinnenseitig und die Trägerschicht 3 des Klebebandes 2 wickelaußenseitig angeordnet. Das Abdeckband 1 kann um einen Kern gewickelt sein, durch den zur Applikation des Abdeckbandes 1 ein Ende eines Bügelgriffes gesteckt ist, der ein kontinuierliches Abrollen des Abdeckbandes 1 von dem Wickel gestattet. Der Kern kann bspw. aus Pappe - auch silikonisiert - oder einem Kunststoff wie bspw. Polyethylen (PE) sein.

Die Abdeckfolie 1 ist zu einem Folienstapel 9 gefaltet. Die Faltungslinien verlaufen alle parallel zur Längsrichtung L.

Das in Fig. 1 darstellte erfindungsgemäße gefaltete Abdeckband 1 zeichnet sich durch eine freiliegende und damit leicht anfassbare Anfasskante 11 aus, die dem Abdeckfolienrand 8, der auf den Randabschnitt 7 des Klebebandes 2 aufkaschiert ist, an der aufgefalteten Abdeckfolie 6 gegenüberliegend angeordnet ist. Frei anfassbar bedeutet hier, dass sich die Anfasskante 11 frei anfassbar über die gesamte Längsausdehnung des Abdeckbandes 1 erstreckt und etwa 0 bis 10 cm neben und parallel zum Klebeband 2, genau genommen neben der Trägerschicht 3 des Klebebandes 2, angeordnet ist. Nach dem Abwickeln des Abdeckbandes 1, gemäß Fig.1, liegt die Anfasskante 11 frei. Sie wird nicht von einem Abdeckmaterial oder Ähnlichem abgedeckt, sondern sie ist entlang ihrer gesamten Längsausdehnung sichtbar und für den Benutzer direkt berührbar und anfassbar, und von halb- beziehungsweise vollmaschineller Optik erkundbar und halb- beziehungsweise vollmaschineller Mechanik greifbar, wenn das Abdeckband 1 vom Wickel abgewickelt ist.

Für eine besonders einfache Erkennung kann der Anfasser bspw. farblich, durch zusätzliche Faltung, Beklebung und/oder durch Kräuselung besonders optisch und/oder haptisch hervorgehoben werden.

Fig. 3 zeigt die Schnittansicht einer weiteren Ausführungsform des erfindungsgemäßen Abdeckbandes 1. Die weitere Ausführungsform des Abdeckbandes 1 weist ebenso ein Klebeband 2 auf, an das ein Abdeckfolienstapel 9 entlang seiner gesamten Längsausdehnung angeklebt ist. In der weiteren Ausführungsform gemäß Fig. 3 ist ein innerer Längsrand der Abdeckfolie 6 auf eine Klebmasseschicht 4 des Klebebandes aufgeklebt. Es sind natürlich auch andere Befestigungsarten denkbar.

Der Abdeckfolienstapel 9 der Fig. 3 weist die spiralförmig oder schneckenförmig gestapelte zweilagige Abdeckfolie 6 auf. Auch hier ist eine äußere Abdeckfolienlage12 in etwa U-förmig um den Abdeckfolienstapel 9 herumgeführt. Die Anfasskante 11 der Abdeckfolie 6 ist rückwärts zurückgeklappt. Rückwärts bedeutet hier vom Klebeband 2 weggeklappt. Dadurch ist die Anfasskante 11 besonders einfach greifbar ausgebildet. Sie kann insbesondere mit den Fingern des Benutzers leicht gefasst werden.

Eine Breite B der auseinandergefalteten Abdeckfolie 6 kann zwischen 50 cm und 2,50 m betragen, vorzugsweise zwischen 1,4 m und 1,9 m. Es sind aber auch alle anderen Zwischenmaße denkbar und mitoffenbart. Die aufgefaltete Abdeckfolie kann auch größere oder kleinere Breiten B aufweisen.

Zur Herstellung des erfindungsgemäßen Abdeckbandes 1 wird die Abdeckfolie 6 zunächst mit dem Abdeckfolienrand 8 entlang der gesamten Längsausdehnung auf dem Randabschnitt 7 des Klebebandes 2 fixiert und dann zunächst doppellagig gefaltet. Dabei wird die Abdeckfolie mit leichtem Versatz entlang einer in Längsrichtung L verlaufenden Faltlinie umgeschlagen und die Anfasskante 11 zum Klebeband 2 hin gefaltet, so dass die Anfasskante 11 auf der der Klebschicht 4 gegenüberliegenden Seite der Abdeckfolie 6 angeordnet ist.

Die Abdeckfolie 6 ist dann über ihre im Wesentlichen gesamte Ausdehnung doppellagig gelegt. Sie wird anschließend ziehharmonikaförmig auf der der Anfasskante 11 gegenüberliegenden Seite zu dem Folienstapel 9 doppellagig gefaltet. Dabei wird die Ziehharmonikafaltung von außen nach innen, d. h. zu der Anfasskante 11 hin gefaltet. Dadurch wird eine äußere gefaltete Lage 12 der Abdeckfolie 6 gebildet, welche die anderen gefalteten Lagen an einer dem Klebeband 2 abgewandten Seite des Folienstapels 9 U-förmig, vorzugsweise vollständig dreiseitig, umfasst.

Ein weiteres Verfahren zur Herstellung des Abdeckbandes beginnt zunächst mit der Faltung der Folie zu einer Doppellage. Besonders vorteilhaft hat sich der Einsatz einer asymmetrisch einfach gefalteten Folie erwiesen, die bereits aufgewickelt auf einem Kern vorliegt. Diese Folie erhält man bspw. bei der Blasfolienextrusion, wobei bei doppelnutziger Fertigung der entstehende Folienschlauch asymmetrisch aufgeschnitten und nach dem Zusammenlegen aufgewickelt wird.

Eine andere Möglichkeit basiert auf einem symmetrischen Schnitt, wodurch ein am Rand aufgeschnittener Schlauch entsteht. Dieser wird dann exakt übereinander gelegt und mit einem anschließenden Randbeschnitt werden asymmetrische Folienschenkel erzeugt. Die asymmetrisch gefaltet vorliegende Folie wird anschließend gemäß dem zuvor beschriebenen Verfahren gefaltet, wodurch der fertige Folienstapel erzeugt wird. Anschließend wird ein Klebeband auf dem Folienstapel fixiert. Prinzipiell kann das Klebeband zu jedem Zeitpunkt der Fertigung auf dem Abdeckfolienrand fixiert werden.

Der Folienstapel kann auch bereits fertig gefaltet und aufgewickelt auf einem Kern vorliegen. Das Klebeband wird dann mit einem Werkzeug, welches sowohl ein Klebeband als auch den aufgewickelten Folienstapel halten und führen kann, lokal auf dem Abdeckfolienrand fixiert, so dass das Abdeckband mit dem Werkzeug hergestellt werden kann.

Fig. 1 zeigt nicht, dass das Abdeckband 1 aufgewickelt ist. Üblicherweise wird das Abdeckband 1 um eine in Fig. 1 unterhalb des Abdeckbandes 1 angeordnete Wickelachse aufgewickelt, so dass die Klebmasseschicht 4 wickelinnenseitig und die Trägerschicht 3 des Klebbandes 1 wickelaußenseitig angeordnet ist.

Vorteilhaft an der Ziehharmonikafaltung gemäß Fig. 1 der Abdeckfolie 6 ist, dass die Abdeckfolie 6 des auf die (nicht dargestellte) Arbeitsfläche aufgeklebten Abdeckbandes 1 mit einem Griff an die Anfasskante 11 und einer Zugbewegung vollständig entfaltet werden kann. Zum anderen ist es vorteilhaft, dass die aufgeklebte und noch nicht aufgefaltete Abdeckfolie 6 in ihrer Position verbleibt, da die äußere gefaltete Lage 12 den Abdeckfolienstapel 9 vollständig umfasst. Ein selbständiges Entfalten ist so nicht möglich. Weiterhin müssen die Faltungen des Folienstapels sich nicht auf gleicher Höhe befinden, sondern können einen Versatz zueinander aufweisen.

### Bezugszeichenliste

- 1: Abdeckband
- 2: Klebeband
- 3: Trägerschicht
- 4: Klebmasseschicht

- 6: Abdeckfolie
- 7: abdeckfolienseitiger Randabschnitt
- 8: Abdeckfolienrand
- 9: Folienstapel

- 11: Anfasskante
- 12: äußere gefaltete Lage

- B: Breite
- D: Dicke
- L: Längsrichtung

## Patentansprüche

1. Abdeckband mit
einem Klebeband (2) mit wenigstens einer Klebseite zum Aufkleben auf eine Arbeitsfläche und einem Randabschnitt (7) und
einem auf dem Randabschnitt (7) angeordneten Abdeckfolienrand (8) einer Abdeckfolie (6), die eine dem Abdeckfolienrand (8) entlang einer Breite (B) der Abdeckfolie (6) gegenüberliegende freie Anfasskante (11) aufweist, wobei die Abdeckfolie (6) zum Randabschnitt (7) hin gefaltet ist und einen Abdeckfolienstapel (9) mit einer Abdeckfolie (6) ausbildet, die eine Breite (B) und eine Länge (L) aufweist, und die Abdeckfolie (6) ist entlang einer entlang der Länge (L) verlaufenden Faltungslinie zu einer Doppellage gefaltet, wobei zwei freie Längsränder der doppellagig gefalteten Abdeckfolie (6) nebeneinanderliegend verlaufen und die doppellagige Abdeckfolie (6) zu einem Stapel gefaltet ist und die beiden Längsränder auf dem Abdeckfolienstapel (9) aufliegen,
**dadurch gekennzeichnet, dass**
die Anfasskante (11) auf dem Abdeckfolienstapel (9) frei aufliegend angeordnet ist und
die Anfasskante (11) auf einer der Klebseite des Klebebandes (2) gegenüberliegenden Seite des Folienstapels (9) aufliegt.

2. Abdeckband nach Anspruch 1,
**dadurch gekennzeichnet, dass** die Anfasskante (11) eine innere Seite aufweist, die unter Kontakt auf dem Folienstapel (9) angeordnet ist, und eine äußere Seite aufweist, die keinen Kontakt hat.

3. Abdeckband nach einem der Ansprüche 1 oder 2,
**dadurch gekennzeichnet, dass** die Anfasskante (11) in Richtung klebebandabseitig umgeklappt ist.

4. Abdeckband nach einem der Ansprüche 1 bis 3,
**dadurch gekennzeichnet, dass** das Klebeband (2) als Kreppklebeband oder PVC-haltiges Klebeband ausgebildet ist.

5. Abdeckband nach einem der Ansprüche 1 bis 4,
**dadurch gekennzeichnet, dass** die Doppellage in einer Ziehharmonikafaltung gefaltet ist und eine äußere Doppellage (12) um einen Ziehharmonikastapel wenigstens U-förmig herumgelegt ist.

6. Abdeckband nach einem der Ansprüche 1 bis 4,
**dadurch gekennzeichnet, dass** die Doppellage in einer Schneckenfaltung gefaltet ist.

7. Abdeckband nach einem der Ansprüche 1 bis 6,
**dadurch gekennzeichnet, dass** die Anfasskante (11) farblich oder haptisch markiert ist.

8. Abdeckband nach einem der Ansprüche 1 bis 7,
**dadurch gekennzeichnet, dass** die Abdeckfolie (6) eine PE-, PP-, PA-, PET- oder PBT-Folie ist oder eine Verbundfolie aus PA und PE oder PP und PE ist oder aus Papier ist oder eine Alufolie ist.

9. Abdeckband nach einem der Ansprüche 1 bis 8,
**dadurch gekennzeichnet, dass** der Abdeckfolienstapel auf einen Papp- oder Kunststoffkern aufgewickelt ist.

10. Verfahren zur Herstellung eines gefalteten Abdeckbandes (1) nach Anspruch 1, indem
ein Abdeckfolienrand (8) einer Abdeckfolie (6) auf einem Randabschnitt (7) eines Klebebandes (2) angeordnet wird,
die Abdeckfolie (6) zum Randabschnitt (7) hin gefaltet wird und einen Abdeckfolienstapel (9) ausbildet, **dadurch gekennzeichnet, dass**
eine dem Abdeckfolienrand (8) entlang einer Breite (B) der Abdeckfolie (6) gegenüberliegende freie Anfasskante (11) auf dem Abdeckfolienstapel (9) frei aufliegend angeordnet wird.

11. Verfahren nach Anspruch 10,
**dadurch gekennzeichnet, dass** die Abdeckfolie (6) doppellagig gelegt wird und ziehharmonikaförmig gefaltet wird.

## Claims

1. Masking tape with
an adhesive tape (2) having at least one adhesive side for adherence to a working face and having an edge portion (7), and
disposed on the edge portion (7), a masking film edge (8) of a masking film (6) which has a free manual engagement edge (11) opposite the masking film edge (8) along a width (B) of the masking film (6), where the masking film (6) is folded toward the edge portion (7) and forms a masking film stack (9) with a masking film (6) which has a width (B) and a length (L), and the masking film (6) is folded along a folding line, running along the length (L), to form a double ply, where two free longitudinal edges of the double-ply-folded masking film (6) run adjacent to one another and the double-ply masking film (6) is folded to form a stack and the two longitudinal edges lie on the masking film stack (9), **characterized in that**
the manual engagement edge (11) is disposed lying freely on the masking film stack (9) and
the manual engagement edge (11) lies on a side of the film stack (9) opposite the adhesive side of the adhesive tape (2).

2. Masking tape according to Claim 1,
**characterized in that** the manual engagement edge (11) has an inner side which is disposed under contact on the film stack (9) and has an outer side which has no contact.

3. Masking tape according to either of Claims 1 and 2, **characterized in that** the manual engagement edge (11) is turned over in the adhesive tape-remote direction.

4. Masking tape according to any of Claims 1 to 3, **characterized in that** the adhesive tape (2) takes the form of a crepe adhesive tape or PVC-containing adhesive tape.

5. Masking tape according to any of Claims 1 to 4, **characterized in that** the double ply is folded in a concertina fold and an outer double ply (12) is placed at least in U-shape around a concertina stack.

6. Masking tape according to any of Claims 1 to 4, **characterized in that** the double ply is folded in a helical fold.

7. Masking tape according to any of Claims 1 to 6, **characterized in that** the manual engagement edge (11) has coloured or tactile marking.

8. Masking tape according to any of Claims 1 to 7, **characterized in that** the masking film (6) is a PE, PP, PA, PET or PBT film or is a composite film of PA and PE or PP and PE or is made of paper or is an aluminium foil.

9. Masking tape according to any of Claims 1 to 8, **characterized in that** the masking film stack is wound on a cardboard or plastic core.

10. Method for producing a folded masking tape (1) according to Claim 1, by disposing a masking film edge (8) of a masking film (6) on an edge portion (7) of an adhesive tape (2),
folding the masking film (6) toward the edge portion (7) and forming a masking film stack (9), **characterized in that**
a free manual engagement edge (11) opposite the masking film edge (8) along a width (B) of the masking film (6) is disposed lying freely on the masking film stack (9).

11. Method according to Claim 10,
**characterized in that** the masking film (6) is made into a double ply and folded concertinawise.

## Revendications

1. Ruban de recouvrement avec
un ruban adhésif (2) avec au moins un côté adhésif destiné à être collé sur une surface de travail et une section de bord (7) et
un bord de film de recouvrement (8) d'un film de recouvrement (6) agencé sur la section de bord (7), qui présente un bord de préhension libre (11) opposé au bord de film de recouvrement (8) le long d'une largeur (B) du film de recouvrement (6), le film de recouvrement (6) étant plié vers la section de bord (7) et réalisant un empilement de film de recouvrement (9) avec un film de recouvrement (6) qui présente une largeur (B) et une longueur (L), et le film de recouvrement (6) étant plié en une double couche le long d'une ligne de pliage s'étendant le long la longueur (L), deux bords longitudinaux libres du film de recouvrement plié en double couche (6) s'étendant l'un à côté de l'autre et le film de recouvrement à double couche (6) étant plié en un empilement et les deux bords longitudinaux reposant sur l'empilement de film de recouvrement (9), **caractérisé en ce que**
le bord de préhension (11) est agencé en reposant librement sur l'empilement de film de recouvrement (9) et
le bord de préhension (11) repose sur un côté de l'empilement de film (9) opposé au côté adhésif du ruban adhésif (2).

2. Ruban de recouvrement selon la revendication 1, **caractérisé en ce que** le bord de préhension (11) présente un côté intérieur qui est agencé en contact sur l'empilement de film (9) et un côté extérieur qui n'est pas en contact.

3. Ruban de recouvrement selon l'une quelconque des revendications 1 ou 2,
**caractérisé en ce que** le bord de préhension (11) est rabattu dans une direction opposée au ruban adhésif.

4. Ruban de recouvrement selon l'une quelconque des revendications 1 à 3,
**caractérisé en ce que** le ruban adhésif (2) est réalisé sous forme de ruban adhésif crêpé ou de ruban adhésif contenant du PVC.

5. Ruban de recouvrement selon l'une quelconque des revendications 1 à 4,
**caractérisé en ce que** la double couche est pliée en accordéon et une double couche extérieure (12) est disposée autour d'un empilement en accordéon au moins en forme de U.

6. Ruban de recouvrement selon l'une quelconque des revendications 1 à 4,
**caractérisé en ce que** la double couche est pliée selon un pliage en spirale.

7. Ruban de recouvrement selon l'une quelconque des revendications 1 à 6,
**caractérisé en ce que** le bord de préhension (11) est marqué par la couleur ou de manière haptique.

8. Ruban de recouvrement selon l'une quelconque des revendications 1 à 7,
**caractérisé en ce que** le film de recouvrement (6) est un film en PE, PP, PA, PET ou PBT, ou un film composite en PA et PE ou PP et PE, ou est en papier, ou est un film d'aluminium.

9. Ruban de recouvrement selon l'une quelconque des revendications 1 à 8,
**caractérisé en ce que** l'empilement de film de recouvrement est enroulé sur un noyau en carton ou en plastique.

10. Procédé de fabrication d'un ruban de recouvrement plié (1) selon la revendication 1, dans lequel un bord de film de recouvrement (8) d'un film de masquage (6) est agencé sur une section de bord (7) d'un ruban adhésif (2),
le film de recouvrement (6) est plié vers la section de bord (7) et réalise un empilement de film de recouvrement (9), **caractérisé en ce que**
un bord de préhension libre (11) opposé au bord de film de recouvrement (8) le long d'une largeur (B) du film de recouvrement (6) est agencé en reposant librement sur l'empilement de film de recouvrement (9).

11. Procédé selon la revendication 10,
**caractérisé en ce que** le film de recouvrement (6) est disposé en double couche et plié en accordéon.
